# EUROPÄISCHE PATENTANMELDUNG

(11) **EP 1 385 352 A1**
(43) Veröffentlichungstag der Anmeldung: **28.01.2004**
(21) Anmeldenummer: 02360222.0
(22) Anmeldetag: 24.07.2002
(51) Int. Cl.: H04Q 11/04

(54) **ISDN U-Schnittstellenüberwachungsvorrichtung**

(71) Anmelder: ALCATEL, 75008 Paris (FR)
(72) Erfinder: Aschrafi, Bagher, 73240 Wendlingen (DE)
(74) Vertreter: Menzietti, Domenico, Dipl.-Ing

(57) **Zusammenfassung**

Die erfindungsgemäße Überwachungsvorrichtung (2) dient zur Überwachung von ISDN-Verbindungen und generiert mittels zweier Umsetzer (4, 5) eine interne, fiktive 4-Draht Verbindung, an der Signale abgegriffen werden können, die einem Demultiplexer (6) als Eingangs- und Steuersignale dienen zwecks Isolierung von Nutz- und/oder Signalisierungsinformationen. Auf einem ersten der 4 Drähte werden Taktsignale bereitgestellt, auf einem zweiten Rahmensignale. Auf dem dritten Draht sind die Informationssignale der Hinrichtung und auf dem vierten Draht die Informationssignale der Rückrichtung isoliert. Mittels der Takt- und Rahmensignale lassen sich die Informationssignale isolieren. Zu den Informationssignalen gehören sowohl die Nutzinformationen, die in sog. B-Kanälen übertragen werden als auch die Signalisierungsinformationen, die in sog. D-Kanälen übertragen werden.

## Beschreibung

Die Erfindung betrifft eine Überwachungsvorrichtung.

Die Überwachungsmöglichkeiten von ISDN-Verbindungen sind beschränkt; ISDN = Integrated Services Digital Network. Dies rührt daher, dass sowohl beim Teilnehmer als auch in der Vermittlungsstelle eine 4-Draht zu 2-Draht Umsetzung stattfindet, wodurch auf der 2-Draht Leitung eine nicht zuzuordnende Abfolge von digitalen Signalen auftritt. In der Vermittlungsstelle als solche sind die übertragenen Daten durch die Rückumsetzung wieder verfügbar, doch ist der Zugang zur Vermittlungsstelle dem Netzbetreiber vorbehalten und somit ohne seine Zustimmung nicht ohne weiteres möglich.

Es ist eine Aufgabe der Erfindung, die Überwachung von ISDN-Verbindungen zu vereinfachen bzw. erst zu ermöglichen.

Gelöst wird diese Aufgabe durch eine Überwachungsvorrichtung gemäß Patentanspruch 1.

Die Überwachungsvorrichtung generiert eine interne, fiktive 4-Draht Verbindung, an der Signale abgegriffen werden können, die einem Demultiplexer als Eingangs- und Steuersignale dienen zwecks Isolierung von Nutz- und/oder Signalisierungsinformationen. Auf einem ersten der 4 Drähte werden Taktsignale bereitgestellt, auf einem zweiten Rahmensignale. Auf dem dritten Draht sind die Informationssignale der Hinrichtung und auf dem vierten Draht die Informationssignale der Rückrichtung isoliert. Mittels der Takt- und Rahmensignale lassen sich die Informationssignale isolieren. Zu den Informationssignalen gehören sowohl die Nutzinformationen, die in sog. B-Kanälen übertragen werden als auch die Signalisierungsinformationen, die in sog. D-Kanälen übertragen werden.

Die Überwachungsvorrichtung wird in die zu überwachende Verbindung eingeschleift. Dies erfolgt z.B. beim Kabelverzweiger oder im Keller eines Hauses oder an einem beliebigen anderen zugänglichen Punkt entlang der Verbindungsstrecke. Die Überwachung erfolgt online ohne negative Auswirkungen auf den Teilnehmer. Es tritt kein Echo auf, da die Überwachungsvorrichtung in der Regel nur empfängt, aber nicht sendet. Die Anschaltung erfolgt digital.

In vorteilhafter Weise sind sowohl reine ISDN-Verbindungen über U_{KO}-Schnittstellen als auch DSL-ISDN-Verbindungen über U-Schnittstellen, bei denen ISDN in einem Extrakanal im DSL übertragen wird, überwachbar; DSL = Digital Subscriber Line. DSL wird auch als XDSL bezeichnet, wobei X z.B. für A =Asymmetrisch, S =Symmetrisch, VH = Very High, etc. stehen kann. Die Erfindung ist auf alle Varianten von DSL anwendbar.

Die Überwachungsmöglichkeiten sind vielfältig. So kann z.B. eine D-Kanal Überwachung durchgeführt werden zwecks Detektion der Teilnehmer-Rufnummer. Ferner ist eine Bitfehlermessung möglich. Ferner sind Abhörmöglichkeiten für Sprach- und/oder Datensignale geschaffen. Die Polizei erhält die Möglichkeit, ISDN-Gespräche abzuhören. Ferner kann der Internet-Datenverkehr eines Teilnehmers überwacht werden. Des weiteren ist der Datenverkehr, z.B. E-Mail-Verkehr, überwachbar.

In einer vorteilhaften Ausgestaltung ist die Überwachungsvorrichtung auch zum Senden geeignet. Dann ist eine Kommunikation zwischen Überwachungsvorrichtung und Teilnehmer sowie Vermittlungsstelle möglich. Beispielsweise wird ein Testsignal gesendet, dass von der Vermittlungsstelle empfangen wird und dessen Empfangsqualität gemessen wird.

Im folgenden wird die Erfindung anhand von vier Ausführungsbeispielen unter Zuhilfenahme von vier Figuren erläutert. Es zeigen:
- Fig.: 1 eine schematische Darstellung einer erfindungsgemäßen Überwachungsvorrichtung in einer reinen ISDN-Verbindung,
- Fig. 2: eine schematische Darstellung einer weiteren erfindungsgemäßen Überwachungsvorrichtung in einer reinen ISDN-Verbindung,
- Fig. 3: eine schematische Darstellung einer erfindungsgemäßen Überwachungsvorrichtung in einer DSL-ISDN-Verbindung und
- Fig. 4: eine schematische Darstellung einer weiteren erfindungsgemäßen Überwachungsvorrichtung in einer DSL-ISDN-Verbindung.

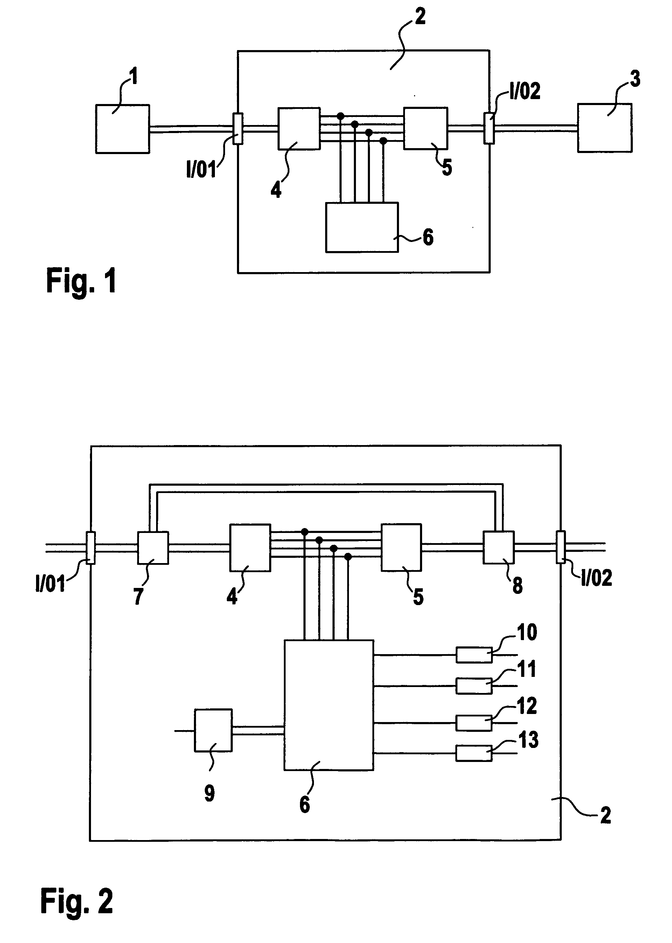

Das erste Ausführungsbeispiel wird nun unter Zuhilfenahme von Fig. 1 erläutert. Fig. 1 zeigt eine Überwachungsvorrichtung in einer reinen ISDN-Verbindung. Die Überwachungsvorrichtung 2 ist eingeschleift in eine ISDN-Verbindung zwischen einem ISDN LT 1 und einem ISDN NT 3; LT = Line Termination, NT = Network Termination. Das ISDN ist ein privates Telekommunikationsnetz eines Netzbetreibers. An der Schnittstelle zum privaten Netz eines Teilnehmers ist ein Netzabschluß angeordnet, der sog. ISDN NT 3, der das ISDN abschließt. Teilnehmerseitig ist der ISDN NT 3 mit mindestens einem ISDN Endgerät und/oder mindestens einem Adapter mit mindestens einem analogen oder einem digitalen Endgerät verbunden. Als analoges Endgerät dient beispielsweise ein analoges Telefon, als digitales Endgerät beispielsweise ein Computer oder ein digitales Telefon. Netzseitig ist der ISDN NT 3 über eine 2-Draht Leitung mit einem ISDN LT 1 verbunden, ggf. unter Zwischenschaltung von einem oder mehr Bauelementen, z.B. einem Konzentrator, einem Splitter, etc.

Die Überwachungsvorrichtung 2 beinhaltet zwei Ein-/Ausgänge I/O1, I/O2 zum Verbinden der Überwachungsvorrichtung mit einer externen 2-Draht ISDN-Verbindung über sog. U_{KO}-Schnittstellen. Der eine Ein-Ausgang I/O1 ist mit ISDN LT 1 und der andere Ein-/Ausgang I/O2 mit ISDN NT 3 verbunden.
Zwischen die beiden Ein-/Ausgänge I/O1, I/O2 sind zwei Umsetzer 4, 5 zur Generierung einer internen 4-Draht ISDN-Verbindung geschaltet. Die Umsetzer 4, 5 beinhalten jeweils einen U_{KO}- und einen S- oder S_{O}-Schaltkreis, die miteinander verbunden sind. Die Schaltkreise sind als integrierte Schaltungen ausgeführt. Der U_{KO}-Schaltkreis dient zur Bereitstellung der 2-Draht Schnittstelle, der S- oder S_{O}-Schaltkreis dient zur Bereitstellung der 4-Draht Schnittstelle. Jeder Schaltkreis führt eine Protokollumsetzung durch und beinhaltet zudem eine Einrichtung zur Taktrückgewinnung zwecks Extraktion der diversen Takte aus dem Signalstrom.

Über die U_{K0}-Schnittstelle werden die ISDN-Informationen kodiert übertragen. Dazu werden Leitungskodes verwendet, z.B. für eine Anpassung des digitalen Datenstroms an das Übertragungsmedium, die Übertragung der Bittakt-Information, die Übertragung der Rahmentaktinformation (alle ISDN Anschlußleitungen benutzen ein Zeitmultiplex-System zum Betrieb der verschiedenen Übertragungskanäle in jeweils eine Richtung) sowie für eine Fehlerdetektion auf Schicht 1. Die im ISDN verwendeten Leitungskodes lassen sich unterscheiden in pseudo-ternäre Kodes (AMI-Code, HDB-3 Code), ternäre Kodes (4B/3T Codes, hier MMS43), quarternäre Kodes (2B/1Q Codes). Die verwendeten Leitungskodes im ISDN müssen so gestaltet werden, dass sie gleichstromfrei sind. Nur so ist es möglich, Datensignale von der Speisespannung zu trennen, bei geringen Pegelunterschieden Signale sicher zu trennen, empfindliche Sender und Empfänger durch galvanische Trennung vor zerstörerischen Einflüssen über die Anschlußleitung sicher zu schützen sowie Taktinformation permanent in den Datenstrom hinein zu kodieren.

Auf einem ersten der 4 Drähte werden Taktsignale bereitgestellt, auf einem zweiten Rahmensignale. Auf dem dritten Draht sind die Informationssignale der Hinrichtung und auf dem vierten Draht die Informationssignale der Rückrichtung isoliert. Mittels der Takt- und Rahmensignale lassen sich die Informationssignale isolieren. Zu den Informationssignalen gehören sowohl die Nutzinformationen, die in sog. B-Kanälen übertragen werden als auch die Signalisierungsinformationen, die in sog. D-Kanälen übertragen werden.

Ferner ist ein Demultiplexer 6 vorgesehen, der vier Eingängen zum Verbinden mit der 4-Draht ISDN-Verbindung aufweist und zur Bereitstellung mindestens eines zu überwachenden Kanals dient. Der Demultiplexer 6 ist vorzugsweise als IOM- oder IOM-2-Demultiplexer ausgeführt; IOM = ISDN Oriented Modular = spezieller, serieller Bus in ISDN.

Mittels der Takt- und Rahmensignale ist der Demultiplexer 6 in der Lage, Informationssignale zu isolieren. Die Taktsignale beinhalten z.B. den Bitakt, der ein Takt ist, mit dem einzelne Schritte (meist Bits) abgetastet werden.

Die Rahmentaktsignale beinhalten z.B. den Rahmentakt, der ein Kennzeichen zur Dekodierung der TDM-Struktur ist; TDM = Time Division Multiplex.

Der Demultiplexer 6 isoliert mindestens einen zu überwachenden Übertragungskanal, z.B. einen B-Kanal, über den Nutzinformationen übertragen werden. Die Anzahl und die Auswahl der zu isolierenden Übertragungskanäle hängt z.B. ab von der Zielsetzung der Überwachung. Soll z.B. nur die Rufnummer des angerufenen Teilnehmers ermittelt werden, so genügt es, den entsprechenden Signalisierungskanal zu isolieren und zu überwachen. Sollen Gespräche abgehört werden, so werden mindestens zwei B-Kanäle überwacht, ein B-Kanal in Hinrichtung und der zugehörige Kanal in Rückrichtung. In einer bevorzugten Variante werden stets alle Kanäle isoliert, z.B. zwei B-Kanäle und ein D-Kanal in Hinrichtung sowie zwei B-Kanäle und ein D-Kanal in Rückrichtung und ggf. auch ein oder mehr Taktsignale. Die Taktsignale können dann in nachfolgenden Verarbeitungseinheiten zum Takten genutzt werden.

Die Anzahl der Ein- und Ausgänge des Demultiplexers 6 ist entsprechend dem Einsatzweck zu wählen. Ein oder mehr Ein- und/oder Ausgänge können als externe Anschlüsse aus der Überwachungsvorrichtung 2 herausgeführt sein.

Das zweite Ausführungsbeispiel wird nun unter Zuhilfenahme von Fig. 2 erläutert. Fig. 2 zeigt eine Überwachungsvorrichtung für eine reine ISDN-Verbindung. Die Überwachungsvorrichtung 2 entspricht der Überwachungsvorrichtung aus Fig. 1 mit den folgenden Unterschieden bzw. Konkretisierungen:

Der Demultiplexer 6 weist sechs Ausgänge auf zur Bereitstellung von zwei Nutzinformationskanälen und einem Signalisierungskanal der 4-Draht ISDN-Verbindung in Hinrichtung und zwei Nutzinformationskanälen und einem Signalisierungskanal der 4-Draht ISDN-Verbindung in Rückrichtung.

Es sind vier Dekodierer 10, 11, 12, 13 oder ggf. Filter vorgesehen, um die Nutzinformationen zu dekodieren. Die Nutzinformationen werden kodiert übertragen. Zwecks Detektion und Überwachung ist eine Dekodierung durchzuführen. Die Dekodierer 10, 11, 12, 13 sind beispielsweise 4B/3T-Dekodierer oder 2B/1 Q-Dekodierer entsprechend der verwendeten Kodierung. An den Ausgängen der Dekodierer 10, 11, 12, 13 sind Nutzinformationen abgreifbar, die z.B. überwacht, verarbeitet, versendet, und/oder abgespeichert werden können. Zu den Nutzinformationen zählen z.B. Sprachsignale, Datensignale, Internetsignale, etc. Die Überwachung, etc. erfolgt z.B. mittels eines speziell programmierten Prozessors und einem Speicher. Als Prozessor wird z.B. ein Digitaler Signalprozessor oder ein Mikroprozessor verwendet. Anstelle eines Prozessors können auch mehrere Prozessoren und anstelle eines Speichers können auch mehrere Speicher verwendet werden. Anstelle eines Prozessors kann auch ein FPGA verwendet werden; FPGA = Freely Programmable Gate Array. Für verschieden Signale, z.B. Sprach- und Datensignale, können verschiedene Verarbeitungseinheiten verwendet werden. Die Erfindung ist unabhängig von einer speziellen Hard- und/oder Softwareausgestaltung.

Ferner ist eine Signalisierungs-Überwachungseinheit 9 vorgesehen, um die Signalisierungsinformationen zu überwachen. Die Signalisierungs-Überwachungseinheit 9 ist z.B. als speziell programmierter Prozessor und einem Speicher ausgeführt. Sie ist mit dem Demultiplexer 6 verbunden. Die Schnittstelle zwischen beiden ist z.B. als S_{O}-Schnittstelle ausgeführt. Aus den vom Demultiplexer 6 empfangenen Signalisierungssignalen im D-Kanal ist z.B. die angerufene Rufnummer sowie die Rufnummer ermittelbar. Des weiteren können im D-Kanal Daten im paketvermittelnden Verfahren übertragen werden. Auch diese sind detektierbar. Bei einer Telefonkonferenz sind alle Teilnehmer identifizierbar. Ebenso können Rufumleitungen detektiert werden. Die detektierten Informationen sind auf einem Monitor darstellbar und können in einem Speicher gespeichert werden. Anstelle in der Überwachungseinheit 2 kann die Signalisierungs-Überwachungseinheit 9 auch ausgelagert sein, sei es als eigenständige Einheit oder als Teil eines Computers. Beispielsweise werden die Ausgänge der Dekodierer 10, 11, 12, 13 und die Signalisierungsausgänge des Demultiplexers 6 nach außen geführt. Diese Ausgänge werden dann mit einem Computer verbunden, der ein spezielles Softwareprogramm beinhaltet, mittels dessen die Auswertung, etc. der Signale erfolgen kann. Der Computer ist z.B. ein Laptop mit Monitor und Tastatur sowie Maus. Alternativ können auch die Dekodierer 10, 11, 12, 13 im Computer integriert sein, als Steckkarte implementiert oder ihre Funktion als Softwareprogramm. Dann werden sowohl die Nutzinformationsausgänge als auch die Signalisierungsausgänge des Demultiplexers 6 nach außen geführt und mit dem Computer verbunden, der die weitere Auswertung, etc. übernimmt. Auf vergleichbare Art und Weise können in einer weiteren Ausgestaltung die Funktionen des Computers zumindest teilweise in die Überwachungsvorrichtung integriert sein, so dass bereits in der Überwachungsvorrichtung die Funktionen Dekodierung, Auswertung, Speicherung, bildliche Darstellung, etc. durchgeführt werden. Andererseits ist auch die Implementierung der Funktionen der Umsetzer 4, 5 und des Demultiplexers 6 auf einer Steckkarte für einen Computer eine nicht unzweckmäßige Variante. Die Aufteilung der erfindungswesentlichen Funktionen auf verschiedene Hardware- und Softwarekomponenten ist für die Anwendung der Erfindung unwesentlich.

Des weiteren sind zwei Bauelemente zur galvanischen Trennung 7, 8 vorgesehen, die zwischen die beiden Ein-Ausgänge I/O1, I/O2 und die beiden Umsetzer 4, 5 geschaltet sind, um eine Umgehungsverbindung für Fernspeisesignale zu generieren. Neben den Nutz- und Signalisierungssignalen werden üblicherweise auch Fernspeisesignale übertragen. Sollten keine Fernspeisesignale übertragen werden, ist die Verwendung der Bauelemente 7, 8 unzweckmäßig. Fernspeisesignale stören die Detektion der Nutz- und Signalisierungsinformationen. Aus diesem Grund ist die Umgehungsverbindung vorgesehen. Die Fernspeisesignale werden über die Umgehungsverbindung unverändert weitergeleitet und erreichen die Umsetzer 4, 5 nicht. Bauelemente 7, 8 können z.B. sein: Übertrager, Opto-Koppler, etc.

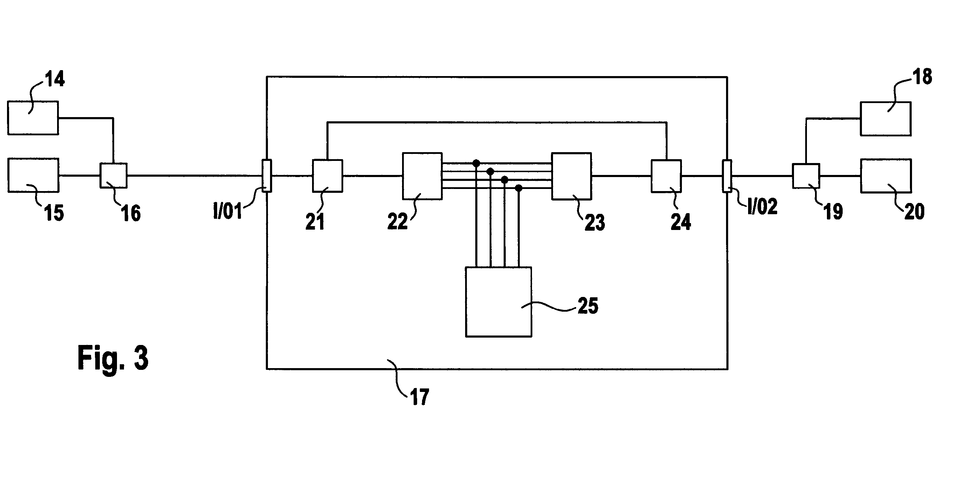

Das dritte Ausführungsbeispiel wird nun unter Zuhilfenahme von Fig. 3 erläutert. Fig. 3 zeigt eine Überwachungsvorrichtung in einer DSL-ISDN-Verbindung. Die Überwachungsvorrichtung 17 ist eingeschleift in eine DSL-ISDN-Verbindung zwischen einem ISDN LT 15, einem DSL LT 14 und einem Filter 16 auf der Netzbetreiberseite und einem ISDN NT 20, einem DSL Modem 18 und einem Filter 19 auf der Teilnehmerseite; LT = Line Termination, NT = Network Termination. Das DSL mit ISDN ist ein privates Telekommunikationsnetz eines Netzbetreibers. An der Schnittstelle zum privaten Netz eines Teilnehmers ist ein Netzabschluß für ISDN angeordnet, der sog. ISDN NT 20, der das ISDN abschließt. Teilnehmerseitig ist der ISDN NT 20 mit mindestens einem ISDN Endgerät und/oder mindestens einem Adapter mit mindestens einem analogen oder einem digitalen Endgerät verbunden. Als analoges Endgerät dient beispielsweise ein analoges Telefon, als digitales Endgerät beispielsweise ein Computer oder ein digitales Telefon. Netzseitig ist der ISDN NT 20 über eine 2-Draht Leitung mit einem ISDN LT 15 verbunden, ggf. unter Zwischenschaltung von einem oder mehr Bauelementen, z.B. einem Konzentrator, einem Splitter, etc. Zusätzlich zum ISDN werden über die gleiche physikalische Leitung DSL-Signale übertragen. Teilnehmerseitig ist dazu das DSL Modem 18 vorgesehen, an das teilnehmerseitig z.B. ein Computer oder ein Fernsehgerät angeschlossen ist, z.B. zwecks Inanspruchnahme von Serviceon-demand und/oder Internet-Diensten. Netzseitig ist das DSL-Modem 18 mit einem DSL LT 14 verbunden, ggf. unter Zwischenschaltung von einem oder mehr Bauelementen, z.B. einem Konzentrator, einem Splitter, etc. Zur Trennung von ISDN- und DSL-Signalen sind die Filter 16 und 19 vorgesehen, die jeweils den gleichen Aufbau haben und in der Regel ein Hochpaßfilter zur Isolierung der DSL-Signale und ein Tiefpaßfilter zur Isolierung der ISDN-Signale aufweisen.

Die Überwachungsvorrichtung 17 beinhaltet zwei Ein-/Ausgänge I/O1, I/O2 zum Verbinden der Überwachungsvorrichtung mit einer externen 2-Draht DSL-ISDN-Verbindung über sog. U-Schnittstellen. Der eine Ein-Ausgang I/O1 ist mit ISDN LT 15 und der andere Ein-/Ausgang I/O2 mit ISDN NT 20 verbunden.

Zwischen die beiden Ein-/Ausgänge I/O1, I/O2 sind zwei Umsetzer 22, 23 zur Generierung einer internen 4-Draht ISDN-Verbindung geschaltet. Die Umsetzer 22, 23 entsprechen funktionell den Umsetzer 4, 5 aus Fig. 1.

Ferner ist ein Demultiplexer 25 vorgesehen, der vier Eingängen zum Verbinden mit der 4-Draht ISDN-Verbindung aufweist und zur Bereitstellung mindestens eines zu überwachenden Kanals dient. Der Demultiplexer 25 entspricht funktionell dem Demultiplexer 6 aus Fig. 1.

Des weiteren sind zwei Hochpass/Tiefpass-Filter 21, 24 vorgesehen, die zwischen die beiden Ein-Ausgänge I/O1, I/O2 und die beiden Umsetzer 22, 23 geschaltet sind, um eine Umgehungsverbindung für DSL-Signale zu generieren. ISDN-Signale werden üblicherweise bei niedrigeren Frequenzen übertragen als DSL-Signale. Die Übertragungsbänder beider Signale überlappen nicht. Mittels eines Tiefpass-Filters mit einer Grenzfrequenz zwischen den Übertragungsbändern können die ISDN-Signale isoliert werden. Zu den Umsetzern 22, 23 gelangen somit nur ISDN-Signale, aber keine DSL-Signale. Mittels eines Hochpass-Filters mit einer Grenzfrequenz zwischen den Übertragungsbändern können die DSL-Signale isoliert werden, welche unverändert über die Umgehungsverbindung weitergeleitet werden.

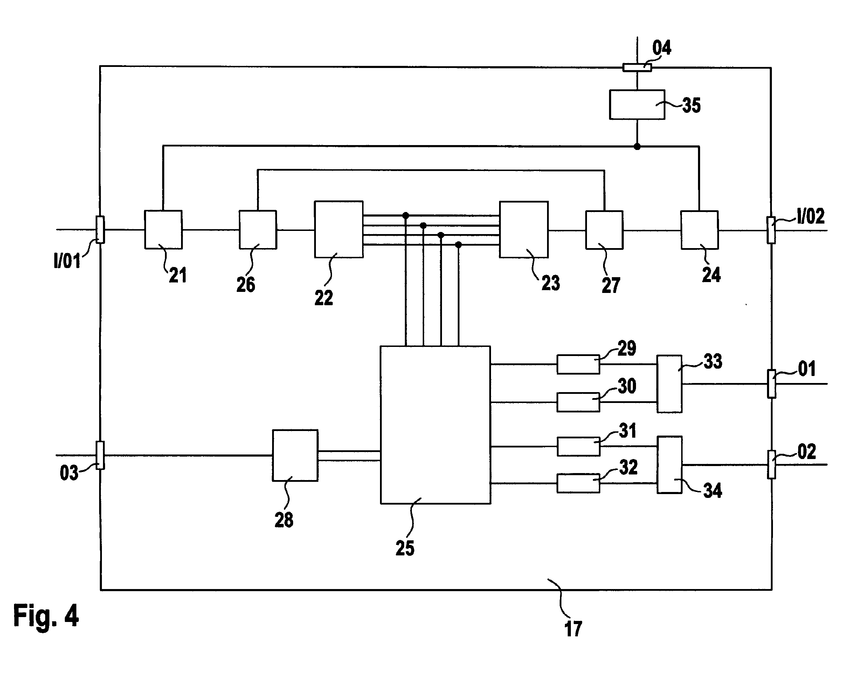

Das vierte Ausführungsbeispiel wird nun unter Zuhilfenahme von Fig. 4 erläutert. Fig. 4 zeigt eine Überwachungsvorrichtung für eine DSL-ISDN-Verbindung. Die Überwachungsvorrichtung 17 entspricht der Überwachungsvorrichtung aus Fig. 3 mit den folgenden Unterschieden bzw. Konkretisierungen:

Der Demultiplexer 25 weist sechs Ausgänge auf zur Bereitstellung von zwei Nutzinformationskanälen und einem Signalisierungskanal der 4-Draht ISDN-Verbindung in Hinrichtung und zwei Nutzinformationskanälen und einem Signalisierungskanal der 4-Draht ISDN-Verbindung in Rückrichtung. Der Demultiplexer 25 entspricht funktionell dem Demultiplexer 6 aus Fig. 2.

Es sind vier Dekodierer 29, 30, 31, 32 oder ggf. Filter vorgesehen, um die Nutzinformationen zu dekodieren. Die Dekodierer 29, 30, 31, 32 entsprechen funktionell den Dekodierern 10, 11, 12, 13 aus Fig. 2. Die Ausgänge der Dekodierer 29, 30 sind mit Eingängen eines ersten Addierers 33 verbunden, dessen Ausgang mit einem ersten Ausgang O1 verbunden ist. Die Ausgänge der Dekodierer 31, 32 sind mit Eingängen eines zweiten Addierers 33 verbunden, dessen Ausgang mit einem zweiten Ausgang O2 verbunden ist. Auf diese Art und Weise gelangen die Nutzinformationssignale gebündelt außerhalb der Überwachungsvorrichtung 17 und können z.B. in einem Computer ausgewertet werden. Am Ausgang O1 können z.B. die Nutzinformationssignale der beiden B-Kanäle in Hinrichtung abgegriffen werden und am Ausgang O2 z.B. die Nutzinformationssignale der beiden B-Kanäle in Rückrichtung.

Ferner ist eine Signalisierungs-Überwachungseinheit 28 vorgesehen, um die Signalisierungsinformationen zu überwachen. Die Signalisierungs-Überwachungseinheit 28 entspricht funktionell der Signalisierungs-Überwachungseinheit 9 aus Fig. 2. Der Ausgang der Signalisierungs-Überwachungseinheit 28 ist mit einem dritten Ausgang O3 verbunden. Auf diese Art und Weise gelangen die Signalisierungssignale außerhalb der Überwachungsvorrichtung 17 und können z.B. in einem Computer ausgewertet werden.

Für die Implementierungsmöglichkeiten der Dekodierer 29, 30, 31, 32 und der Signalisierungs-Überwachungseinheit 28 gelten die gleichen Ausführungen wie zu den funktionsgleichen Bauelementen aus Fig. 3.

Des weiteren sind zwei Bauelemente zur galvanischen Trennung 26, 27 vorgesehen, die zwischen die beiden Hochpass/Tiefpass-Filter 21, 24 und die beiden Umsetzer 22, 23 geschaltet sind, um eine Umgehungsverbindung für Fernspeisesignale zu generieren. Sie entsprechen funktionell den Bauelementen 7, 8 aus Fig. 2. Die beiden Bauelemente zur galvanischen Trennung 26, 27 können in einer bevorzugten Ausgestaltung auch in die Überwachungsvorrichtung 17 aus Fig. 3 eingebaut sein, zwischen die beiden Hochpass/Tiefpass-Filter 21, 24 und die beiden Umsetzer 22, 23.

An die Umgehungsverbindung für DSL-Signale in Fig. 4 ist vorteilhafterweise eine DSL-Überwachungseinheit 35 angeschlossen, um übertragene DSL-Signale zu überwachen. Der Ausgang der DSL-Überwachungseinheit 35 ist mit einem vierten Ausgang O4 verbunden, an den ein Computer zwecks Auswertung der DSL-Signale angeschlossen werden kann. DSL-Signale können direkt an der 2-Draht Leitung detektiert werden. Mittels der Überwachungsvorrichtung und eines entsprechend programmierten Computers können somit sowohl ISDN- als auch DSL-Signale überwacht werden. Auf diese Art und Weise ist es möglich, den gesamten Informationsfluss von und zu einem Teilnehmer zu überwachen.

Zusammenfassen wird das allgemeine, erfindungsgemäße Verfahren beschrieben:

Beim Verfahren zum Überwachen von ISDN-Verbindungen werden folgende Schritte durchgeführt:
Verbinden einer Überwachungsvorrichtung zwei Ein-/Ausgänge mit einer externen 2-Draht ISDN- oder DSL-ISDN-Verbindung über U_{KO}- bzw. U-Schnittstellen,
Generieren einer internen 4-Draht ISDN-Verbindung mittels zweier Umsetzer und

Bereitstellen mindestens eines zu überwachenden Kanals aus den Signalen auf der generierten 4-Draht ISDN-Verbindung.

Bevorzugt ist das Isolieren mindestens eines B-Kanals zur Übertragung von Nutzinformationen und/oder mindestens eines D-Kanals zur Übertragung von Signalisierungsinformationen aus den Signalen auf den 4 Drähten der generierten 4-Draht ISDN-Verbindung, die Takt- und Rahmensignale beinhaltet.

In den Ausführungsbeispielen sind 2-Draht Leitungen teils mit zwei parallelen durchgezogenen Linien und teils mit einer einzelnen durchgezogenen Linie dargestellt. Dies erfolgte aus Gründen der Übersichtlichkeit.

Wie bereits weiter oben ausgeführt, ist für die Anwendung der Erfindung die funktionale Aufteilung der erfindungswesentlichen Funktionen auf verschiedene Hardware- und Softwarekomponenten unwesentlich. Auch die Verwendung des Prozessortyps, z.B. Mikroprozessor oder-kontroller sowie die Art der Programmiersprache für ein zu verwendendes Computerprogramm ist unwesentlich.

Die gesamte oder ein großer Teil der Überwachungsvorrichtung können als integrierte Schaltung implementiert sein.

Anstelle bei einem teilnehmerseitigen ISDN NT, der auch als ISDN NTBA (BA = Basisanschluß) mit zwei B- und einem D-Kanal pro Teilnehmer bezeichnet werden kann, ist die Erfindung auch an bei einem Primärmultiplexanschluss, einem sog. PCM 30, anwendbar, an den bis zu 30 Teilnehmer angeschlossen werden können. Der PCM 30 weist dazu teilnehmerseitig eine S₂ₘ-Schnittstelle auf.

Der ISDN NT kann als separates Bauteil ausgeführt sein oder z.B. in die ISDN-Karte eines Computers integriert sein. Die Erfindung ist auch anwendbar bei einem intelligenten ISDN NT zum Anschluß mehrerer Teilnehmer.

Anstelle bei einer U_{kO}-Schnittstelle (Vollduplex-Betrieb) ist die Erfindung auch anwendbar bei einer U_{pO}- oder Uₚₙ-Schnittstelle (Halbduplex-Betrieb)

In einer bevorzugten Ausgestaltung der Erfindung ist die Überwachungsvorrichtung auch zum Senden geeignet. Dann sind die Dekodierer in vorteilhafter Weise durch Codecs ersetzt, die sowohl dekodieren als auch kodieren können oder es sind zusätzlich separate Kodierer vorgesehen. Ferner ist ein Multiplexer vorgesehen zwecks Bündelung der zu übertragenden Informationen. Der Multiplexer ist ebenfalls mit der internen 4-Draht Leitung verbunden. Des weiteren sind optional geeignete, weitere Bauelemente, wie Echokompensation, Testsignalgenerator, etc. vorhanden. In einer Variante der bevorzugten Ausgestaltung ist der Demultiplexer ersetzt durch ein ISDN-Telefon oder Teilen davon. Dieses weist die geeigneten Bauelemente sowohl zum Senden als auch zum Empfangen auf. Das ISDN-Telefon ist in vorteilhafter Weise mit einem Computer verbunden. Alternativ können die Umsetzer im ISDN-Telefon integriert sein, das dann zur Überwachungsvorrichtung wird. Umsetzer und benötigte ISDN-Telefon-Funktionalität könne auch in einem Computer integriert sein, z.B. mittels einer besonders ausgestalteten Steckkarte, der dann zur Überwachungsvorrichtung wird.

## Patentansprüche

1. Überwachungsvorrichtung (2; 17) für ISDN, beinhaltend:
zwei Ein-/Ausgänge (I/O1, I/O2) zum Verbinden der Überwachungsvorrichtung (2; 17) mit einer externen 2-Draht ISDN- oder DSL-ISDN-Verbindung über U_{KO}- bzw. U-Schnittstellen,
zwei, zwischen die beiden Ein-/Ausgänge (I/O1, I/O2) geschaltete Umsetzer (4, 5; 22, 23) zur Generierung einer internen 4-Draht ISDN-Verbindung und
einen Demultiplexer (6; 25) mit vier Eingängen zum Verbinden mit der 4-Draht ISDN-Verbindung und zur Bereitstellung mindestens eines zu überwachenden Kanals.

2. Überwachungsvorrichtung (2; 17) nach Anspruch 1, **dadurch gekennzeichnet, dass** der Demultiplexer (6; 25) sechs Ausgänge aufweist zur Bereitstellung von zwei Nutzinformationskanälen und einem Signalisierungskanal der 4-Draht ISDN-Verbindung in Hinrichtung und zwei Nutzinformationskanälen und einem Signalisierungskanal der 4-Draht ISDN-Verbindung in Rückrichtung.

3. Überwachungsvorrichtung (2; 17) nach Anspruch 2, **dadurch gekennzeichnet, dass** vier Dekodierer (10, 11, 12, 13; 29, 30, 31, 32) oder Filter vorgesehen sind, um die Nutzinformationen zu dekodieren.

4. Überwachungsvorrichtung (2; 17) nach Anspruch 2, **dadurch gekennzeichnet, dass** eine Signalisierungs-Überwachungseinheit (9; 28) vorgesehen sind, um die Signalisierungsinformationen zu überwachen.

5. Überwachungsvorrichtung (2; 17) nach Anspruch 1, **dadurch gekennzeichnet, dass** zwei Hochpass/Tiefpass-Filter (21, 24) vorgesehen sind, die zwischen die beiden Ein-Ausgänge (I/O1, I/O2) und die beiden Umsetzer (22, 23) geschaltet sind, um eine Umgehungsverbindung für DSL-Signale zu generieren.

6. Überwachungsvorrichtung (2; 17) nach Anspruch 5, **dadurch gekennzeichnet, dass** eine DSL-Überwachungseinheit (35) an die Umgehungsverbindung für DSL-Signale angeschlossen ist, um übertragene DSL-Signale zu überwachen.

7. Überwachungsvorrichtung (2; 17) nach Anspruch 1, **dadurch gekennzeichnet, dass** zwei Bauelemente zur galvanischen Trennung (7, 8; 26, 27) vorgesehen sind, die zwischen die beiden Ein-Ausgänge (I/O1, I/O2) und die beiden Umsetzer (4, 5; 22, 23) geschaltet sind, um eine Umgehungsverbindung für Fernspeisesignale zu generieren.

8. Verfahren zum Überwachen von ISDN-Verbindungen mit folgenden Schritten:
Verbinden einer Überwachungsvorrichtung (2; 17) zwei Ein-/Ausgänge (I/O1, I/O2) mit einer externen 2-Draht ISDN- oder DSL-ISDN-Verbindung über U_{KO}- bzw. U-Schnittstellen,
Generieren einer internen 4-Draht ISDN-Verbindung mittels zweier Umsetzer (4, 5; 22, 23) und
Bereitstellen mindestens eines zu überwachenden Kanals aus den Signalen auf der generierten 4-Draht ISDN-Verbindung.

9. Verfahren nach Anspruch 8, **gekennzeichnet durch** das Isolieren mindestens eines B-Kanals zur Übertragung von Nutzinformationen und/oder mindestens eines D-Kanals zur Übertragung von Signalisierungsinformationen aus den Signalen auf den 4 Drähten der generierten 4-Draht ISDN-Verbindung, die Takt- und Rahmensignale beinhaltet.
